(19) **Europäisches Patentamt**

**European Patent Office**

**Office européen des brevets**

(11) **EP 0 885 979 B1**

(12) **FASCICULE DE BREVET EUROPEEN**

(45) Date de publication et mention
de la délivrance du brevet:
**02.01.2003 Bulletin 2003/01**

(51) Int Cl.⁷: **C22F 1/10**, C03B 37/08,
C03B 37/095

(21) Numéro de dépôt: **98401394.6**

(22) Date de dépôt: **10.06.1998**

(54) **Procédé de fabrication d'un article en alliage renforcé par dispersion d'oxydes**

Verfahren zum Herstellen eines Teils aus einer durch Oxiddispersion gehärteten Legierung

Process for making an article from an oxide dispersion strengthened alloy

(84) Etats contractants désignés:
**AT DE FR GB SE**

(30) Priorité: **18.06.1997 FR 9707562**

(43) Date de publication de la demande:
**23.12.1998 Bulletin 1998/52**

(73) Titulaire: **SAINT GOBAIN SEVA**
**71100 Chalon-sur-Saône (FR)**

(72) Inventeur: **Bagard, Jean-Paul**
**71880 Chatenoy-le-Royal (FR)**

(74) Mandataire: **Muller, René**
**SAINT-GOBAIN RECHERCHE**
**39, quai Lucien Lefranc**
**93303 Aubervilliers (FR)**

(56) Documents cités:
**EP-A- 0 447 858          EP-A- 0 668 122**
**WO-A-92/09535          WO-A-93/21357**
**US-A- 4 402 767**

# Description

La présente invention concerne la fabrication d'articles façonnés en alliage renforcé par dispersion d'oxydes, plus particulièrement par mise en forme à chaud de plaques ou de tôles constituées de tels alliages.

Les alliages renforcés par dispersion d'oxydes sont des superalliages, notamment à base de nickel et/ou de fer, renfermant en dispersion au sein de leur matrice de fines particules d'oxyde qui, en bloquant la migration des dislocations, rendent le matériau très résistant, et ce jusqu'à des températures très élevées.

Leur très bonne résistance à la rupture, à la fatigue thermique et à la corrosion rend ces matériaux très avantageux pour des applications industrielles où les pièces sont fortement sollicitées à température élevée, telles que des compresseurs, turbo compresseurs, turbines aéronautiques ou aérospatiales, outils utilisables dans l'élaboration et/ou la transformation du verre. Ces matériaux sont obtenus par métallurgie des poudres en réalisant un alliage mécanique des différents métaux avec atomisation de poudres métalliques dans un mélangeur approprié, qui est ensuite forgé, extrudé et laminé à chaud. A ce stade, la matière a subi une recristallisation dite « primaire» et la matrice de l'alliage présente une microstructure à grains ultrafins submicroniques (taille de l'ordre de 50 nm à 1 μm) dans laquelle sont dispersées les petites particules d'oxyde.

Des propriétés de résistance améliorées peuvent être obtenues par un traitement thermique dit de « recristallisation secondaire ». Ce traitement, qui consiste en un recuit à une température déterminée dépendant uniquement de la composition de l'alliage, est destiné à faire croître la taille des grains. On considère que le traitement a réussi quand on constate une croissance dite « anormale » des grains qui donne une structure finale à grains très gros anisotropes de forme allongée, d'une longueur de l'ordre de quelques centimètres, structure dans laquelle le glissement aux joints de grains est très difficile.

On a malheureusement constaté que le succès d'un tel traitement n'est pas assuré d'un échantillon d'alliage à un autre de composition identique et on a mis en évidence l'influence du passé technique d'un échantillon sur son aptitude à produire la croissance anormale recherchée ; c'est-à-dire que les traitements, notamment thermiques et mécaniques, reçus par l'alliage pour constituer l'échantillon que l'on veut soumettre au recuit de recristallisation secondaire conditionnent le comportement de l'échantillon lors de ce traitement.

Ces différences de comportement ont été mises en évidence par exemple dans EP-A-0 447 858 qui propose en conséquence une méthode pour adapter la vitesse de montée en température du traitement de recristallisation, à un substrat donné tel qu'une plaque ou un barreau.

Parmi les étapes importantes du passé technique d'un tel alliage, on compte tout d'abord l'élaboration de l'alliage par voie mécanique qui implique des mécanismes extrêmement complexes et dont le contrôle est très délicat, et ensuite les étapes de consolidation et de mise en forme de l'alliage à sa forme finale avant recristallisation. Chacune de ces étapes participe pour une part importante au comportement plus ou moins facilement recristallisable de l'alliage, et une fluctuation minime d'un seul paramètre de traitement est susceptible d'affecter très fortement la capacité de croissance anormale de l'alliage.

De fait, les fabricants d'alliages renforcés par dispersion d'oxydes ne parviennent pour l'instant à contrôler à peu près cette capacité que pour des formes relativement simples et les seuls articles présentant une matrice à gros grains proposés sur le marché sont sous forme de plaques ou de barreaux de section ronde ou rectangulaire.

Par contre, la réalisation de pièces de forme plus complexe présentant une matrice renforcée à gros grains pose un problème qui n'a pas encore trouvé de solution pleinement satisfaisante.

Des tentatives ont déjà effectuées pour fabriquer des pièces façonnées à partir de matériaux non recristallisés, initialement sous forme de plaques ou de barreaux non pliables à froid, par des techniques de formage à chaud (autour de 1000°C), ces pièces étant soumises une fois le formage terminé à un recuit de recristallisation destiné à provoquer la croissance des grains. Toutefois, si l'alliage sous sa forme de départ dispose a priori d'une capacité de croissance anormale à la recristallisation dans des conditions spécifiées par le fabricant, la pièce façonnée est, elle, plus ou moins facilement recristallisable et il arrive fréquemment que l'alliage ne développe pas à la fin du procédé de structure à gros grains ou ne la développe que sur une partie de la section de la pièce. Ces fabrications comportent en général une proportion d'articles défectueux bien trop élevée pour être acceptables.

Pour la fabrication d'objets présentant une symétrie de révolution, on a proposé des techniques de fabrication à partir de barreaux d'alliage, dans lesquelles les barreaux sont transformés en des éléments profilés, notamment par laminage circulaire à chaud ou fluotournage, puis soumis au recuit de recristallisation. L'inconvénient principal de ces techniques est le défaut de contrôle précis de la température de la pièce au cours de son façonnage, et par conséquent des conditions générales du traitement thermomécanique. De fait les pièces fabriquées de cette façon présentent assez rarement la microstructure désirée là où elle est nécessaire.

Dans le document EP-A-0 668 122 on a proposé une autre méthode, plus simple, pour fabriquer des pièces présentant une concavité formant élément d'enceinte de fluide, cette fois-ci par emboutissage à partir d'un flan en alliage réfractaire tel qu'un alliage renforcé par dispersion d'oxydes. Le procédé consiste à enduire le flan avec un revêtement à base d'un matériau céramique, puis à réaliser des opérations de formage par emboutissage à chaud au cours desquelles le revêtement joue à la fois un rôle de lubrifiant et d'isolant thermique, et finalement à soumettre la pièce refroidie à un traitement thermique de recristallisation secondaire. Bien que cette technique permette de bien contrôler la température de formage grâce au revêtement céramique, il arrive encore que certaines pièces ne développent pas, ou seulement sur certaines parties de leur section, la structure à gros grains désirée, même en modifiant la température d'emboutissage ou de recristallisation.

Les plaques et les tôles dans lesquelles sont découpés les flans ont en effet, à la différence des barreaux, un passé technique chargé de nombreuses opérations de traitement thermo-mécanique, en particulier de laminage à chaud, qui fait que si dans un même lot de plaques la capacité de croissance anormale à la recristallisation secondaire est assez homogène, elle change parfois radicalement d'un lot à l'autre.

Ainsi, on a remarqué que si certaines plaques sont capables de développer après le formage par emboutissage selon EP-A-0 668 122 une microstructure à gros grains typique d'une croissance anormale, d'autres bien que de composition identique, voient leur capacité de recristallisation inhibée au cours du procédé et conduisent à des pièces défectueuses. Il est bien évidemment souhaitable pour éviter un taux de rebut trop important, de trouver un moyen de transformer ces mêmes plaques à la forme voulue sans perdre la capacité de croissance anormale.

Le problème que la présente invention se propose de résoudre est d'obtenir, dans une pièce formée par emboutissage d'un flan d'alliage, la structure à gros grains en tout point de la pièce, ou au moins en tout point où cette structure est souhaitable pour procurer une résistance améliorée, et ce quel que soit le passé technique du matériau constituant le flan et quelle que soit la forme finale de la pièce, c'est-à-dire même si la réalisation de cette forme suppose des contraintes d'emboutissage élevées et une forte sollicitation du matériau pendant l'emboutissage.

C'est en cherchant à atteindre ce but, ainsi que d'autres qui apparaîtront par la suite, que les présents inventeurs ont constaté que, de façon surprenante, une fois que la structure à gros grains a été obtenue par le traitement de recristallisation secondaire avec croissance anormale des grains, on peut encore emboutir la pièce d'alliage recristallisé sans endommager cette structure. En effet, la technique de l'emboutissage est bien connue pour sa très forte hétérogénéité dans la répartition des contraintes et des déformations subies par la pièce, due au fait que l'on applique instantanément une contrainte élevée sur toute la surface du flan en contact entre le poinçon et la matrice, sans possibilité de réduire le gradient de contrainte locale par migration de dislocations. L'invention a révélé que la matrice recristallisée à gros grains est emboutissable sans rupture et que les gros grains anisotropes sont susceptibles de se plier au cours de l'emboutissage sans apparition de défaut dans la structure.

Ainsi, quand un alliage embouti ne développe pas lorsqu'il est soumis à un traitement thermique de recristallisation secondaire la croissance de grains désirée parce que l'emboutissage a anéanti la capacité de recristallisation anormale du flan de départ, la structure à gros grains peut néanmoins être obtenue dans le même embouti en réalisant le recuit de recristallisation secondaire à un stade intermédiaire du formage, alors que la contrainte appliquée est encore tolérée par le flan du point de vue de la recristallisation, le recuit ayant pour effet de créer et de « figer » la structure à gros grains, après quoi l'on poursuit l'emboutissage sur la pièce intermédiaire recristallisée présentant la structure à gros grains souhaitée.

A cet égard, l'invention a pour objet un procédé de fabrication d'un article, notamment d'un outil utilisable pour l'élaboration du verre, à partir d'un flan constitué d'un alliage renforcé par dispersion d'oxydes ayant une structure à grains ultrafins, ce procédé comprenant les étapes consistant à :

- réaliser un formage partiel à chaud par emboutissage dudit flan à une température au moins égale à sa température de plasticité, pour former une pièce façonnée,
- soumettre la pièce façonnée à un traitement thermique de recristallisation secondaire de façon à développer une croissance anormale des grains, et
- réaliser un nouveau formage à chaud par emboutissage pour donner à la pièce façonnée recristallisée la forme de l'article.

De façon tout à fait inattendue, les gros cristaux issus de la croissance anormale des grains ultrafins de départ se laissent déformer par emboutissage sans apparition de défauts dans la structure, et cet emboutissage se fait sans difficulté (sans effort excessif) à la température de plasticité de l'alliage.

Le procédé de l'invention est adapté pour fabriquer des articles de formes très variées, la technique de l'emboutissage étant cependant plus particulièrement appropriée pour la fabrication d'objets présentant au moins une partie concave.

Il s'applique à tous les alliages renforcés d'oxydes usuels dans lesquels la matrice est généralement à base de nickel, cobalt, chrome, platine, rhodium ou de fer, plus particulièrement à base de nickel et de chrome, et les oxydes dispersés sont généralement des particules d'oxyde d'yttrium.

D'un alliage à l'autre, les températures de plasticité et de recristallisation secondaire sont différentes mais bien entendu connues de l'homme du métier. Les étapes de formage à chaud sont conduites à une température au moins égale à la température de plasticité et inférieure à la température de recristallisation secondaire pour bien distinguer les étapes de traitement.

Chaque emboutissage est avantageusement réalisé de la manière la plus isotherme possible, notamment en chauffant le poinçon et la matrice à une température adéquate.

Un mode de réalisation avantageux consiste à enduire le flan avant chaque emboutissage avec au moins un revêtement formé d'une colle à base d'un matériau minéral, notamment verre ou céramique, connu en soi et dont la composition peut avantageusement être adaptée pour résister à la température de mise en forme. Le revêtement minéral est appliqué de façon à constituer un manchon qui enveloppe la totalité du flan et qui isole ce dernier d'une part des transferts thermiques avec l'extérieur et/ou les outils d'emboutissage et d'autre part des frottements sur les outils d'emboutissage.

Alors qu'il est préférable d'opérer à température quasiment constante lors de l'emboutissage, il est également avantageux de procéder à un refroidissement de la pièce après le premier formage à chaud, et de préférence après chaque opération de travail à chaud, pour obtenir d'excellents résultats lors de la phase de recristallisation secondaire.

L'homme du métier est à même de choisir la température d'emboutissage selon sa pratique courante, mais la présente invention entend apporter également quelques améliorations permettant d'optimiser la structure cristalline finale de l'alliage.

Selon la présente invention, on a en effet mis en évidence l'influence de la température d'emboutissage sur le développement de la croissance anormale des grains de l'alliage au cours d'un recuit de recristallisation ultérieur. Il est ainsi apparu que chaque alliage présente une plage de température caractéristique telle que, lorsque l'alliage est préalablement embouti à une température de formage comprise dans cette plage, la taille des grains de recristallisation secondaire est maximisée. On réalisera donc avantageusement au moins le premier formage partiel du procédé de l'invention dans cette plage de température.

Cette plage de température très étroite, que l'on peut qualifier pour simplifier de « température optimale d'emboutissage », peut se décaler de plusieurs degrés d'un lot d'alliage à l'autre, même de composition identique.

Elle se détermine aisément au moyen d'une expérimentation telle que la suivante :

- on soumet une série d'éprouvettes d'alliage identiques à un emboutissage dans des conditions notamment de charge et de vitesse identiques, mais à des températures variables,
- on soumet les éprouvettes embouties à un traitement thermique de recristallisation secondaire (dans les conditions connues adaptées à l'alliage utilisé),
- on observe sur chaque éprouvette (par les techniques classiques de la métallurgie) la taille des grains obtenus à la suite de la recristallisation,

- on détermine la plage de température d'emboutissage pour laquelle les grains ont subi une croissance anormale, et
- on choisit la température d'emboutissage du flan dans la plage de température ainsi définie.

Pour fixer les idées, on peut dire qu'une plage de température optimale d'emboutissage d'un alliage renforcé par dispersion d'oxydes courant, notamment à base de nickel et de chrome, peut se situer entre 700°C et 1200°C, plus particulièrement entre 1050 et 1180°C, notamment entre 1075 et 1125°C, mais il ne s'agit que de valeurs indicatives données uniquement à titre d'illustration.

Le procédé selon l'invention se caractérise par une première étape de formage partiel dans laquelle l'emboutissage est tel qu'il préserve la capacité de croissance anormale des grains d'alliage, et que le recuit intermédiaire de recristallisation fournit la structure de grains désirée.

A cet égard, les présents inventeurs ont mis en évidence le fait que certains flans d'alliage ont un passé technique tel que leur capacité à recristalliser anormalement est inhibée lorsque le taux de déformation local appliqué au flan lors de l'emboutissage dépasse une certaine limite caractéristique de chaque flan.

Dans un tel cas, le formage partiel à chaud sera effectué dans des conditions telles que le taux de déformation local soit en-deçà de la limite critique inhibant la croissance anormale du flan d'alliage utilisé.

L'homme du métier est à même de déterminer sans effort excessif par des opérations de routine l'ampleur de la déformation d'emboutissage qui peut être tolérée par le flan lors de ce premier formage partiel, et à quel stade du formage le recuit intermédiaire doit avoir lieu, par exemple en soumettant une série d'échantillons de l'alliage considéré à des essais d'emboutissage et de recristallisation.

Cette méthode simple a cependant l'inconvénient d'être fastidieuse car elle doit être répétée à chaque fois que l'on change de lot d'alliage et car elle est destructive vis-à-vis des échantillons utilisés.

La présente invention obvie également à cet inconvénient et fournit une méthode pour déterminer des paramètres de formage à chaud, en particulier le taux de déformation local, préservant ou au contraire inhibant la capacité de recristallisation secondaire avec croissance anormale des grains.

Cette méthode repose sur la découverte inattendue par les présents inventeurs que des échantillons d'alliage ayant un passé technique différent se comportent de la même façon lors d'un traitement de recristallisation secondaire, c'est-à-dire développent la même croissance de grains, s'ils ont été préalablement mis en forme chacun à leur température optimale de formage.

Par conséquent, il suffit pour connaître la plage critique de taux de déformation local d'un alliage de composition chimique donnée, de conduire une seule et unique série d'essais d'emboutissage et de recristallisation secondaire sur un lot particulier de cet alliage, série d'essais dans laquelle les opérations d'emboutissage sont effectuées à la température optimale de formage en faisant varier le taux de déformation local appliqué et en déterminant visuellement par les techniques classiques de la métallurgie pour quels taux de déformation la croissance anormale a lieu ou est inhibée.

Les résultats pourront être ensuite extrapolés à tout autre lot d'alliage de la même composition, sous réserve qu'il soit mis en forme à la température optimale qui lui est propre.

La méthode selon l'invention permet d'économiser par rapport à la méthode empirique envisagée plus haut un nombre important d'étapes consommatrices de temps et de matière première, et par conséquent de rationaliser la fabrication.

Il y a lieu de remarquer que cette méthode, si elle trouve une application toute particulière dans le procédé de l'invention, ne devrait être limitée ni à la technique de mise en forme par emboutissage, la température optimale de formage étant valable pour toute autre technique de déformation, ni à l'application à une technique en deux temps avec un second formage après la recristallisation secondaire. En effet, cette méthode permet également de vérifier, dans le cas où la déformation totale nécessaire à l'obtention de l'article désiré n'atteint pas le seuil critique inhibant la croissance anormale, que l'on peut développer la structure à gros grains dans la pièce complètement formée en plaçant le traitement thermique au stade final du procédé de fabrication.

Dans le cadre préféré de la technique de l'emboutissage, l'invention a donc en particulier pour objet un procédé dans lequel le taux de déformation local appliqué au flan au cours du formage à chaud, notamment formage partiel, est choisi en deçà de la limite critique inhibant la croissance anormale de l'alliage utilisé, ce procédé comprenant les étapes préalables suivantes :

- on soumet une série d'éprouvettes d'un alliage de composition identique à l'alliage utilisé, à un emboutissage à une température choisie dans la plage de température optimale d'emboutissage de l'alliage constituant les éprouvettes, et suivant des profils de déformation variables,
- on soumet les éprouvettes embouties à un traitement thermique de recristallisation secondaire,
- en chaque point des éprouvettes embouties recristallisées, on observe la taille des grains d'alliage et on détermine le taux de déformation local de l'éprouvette,
- on détermine le domaine critique des taux de déformation locaux inhibant la croissance anormale, c'est-à-dire les taux pour lesquels on n'observe pas de grains résultant d'une croissance anormale, et
- on choisit le taux de déformation appliqué lors du formage partiel à chaud en dehors de ce domaine critique.

En général, on observe que le taux de déformation local dépasse la limite critique inhibant la croissance anormale dans des parties très sollicitées du flan, en particulier là où l'emboutissage provoque une importante variation d'épaisseur.

A titre indicatif, des taux de déformation définis par le couple des valeurs des déformations vraies $\varepsilon_1$ et $\varepsilon_2$ (notations connues en soi, utilisées communément dans la modélisation des déformations et désignant le logarithme de l'allongement suivant deux axes orthogonaux d'un cercle élémentaire de la surface du flan initial) satisfaisant les relations suivantes pourraient en général être considérés comme inhibant la capacité de croissance anormale :

$$\varepsilon_1 > 0,3 \qquad ou \qquad \varepsilon_1 < 0,01$$

$$\varepsilon_2 > 0,5$$

$$\varepsilon_1 < - 0,25\ \varepsilon_2$$

Ainsi, il sera en général avantageux d'appliquer lors du formage partiel un taux de déformation local limité par les relations suivantes :

$$\varepsilon_2 \leq 0,5$$

$$\varepsilon_1 \geq - 0,25\ \varepsilon_2$$

de préférence avec

$$0,01 \leq \varepsilon_1 \leq 0,3$$

Par précaution, on pourra choisir des taux de déformation plus à l'intérieur de ce domaine préservant la croissance anormale, par exemple tels que :

$$0,025 \leq \varepsilon_1 \leq 0,3$$

$$\varepsilon_2 \leq 0,1,\ notamment\ \varepsilon_2 \leq 0,05$$

$$\varepsilon_1 \geq - 0,5\ \varepsilon_2,\ voire\ \varepsilon_1 \geq - \varepsilon_2$$

L'invention procure un progrès considérable dans le domaine de la mise en forme des alliages renforcés par dispersion d'oxydes car elle permet, quelle que soit la forme de la pièce que l'on souhaite fabriquer, de trouver un protocole opératoire adapté au matériau de départ et garantissant l'obtention d'une microstructure à gros grains allongés anisotropes dans toute la pièce, ou au moins toutes les zones souhaitées de la pièce, et donc d'une pièce présentant les qualités optimales.

Parmi les applications très variées que l'homme du métier reconnaîtra en fonction de ses besoins, l'invention s'applique notamment à la fabrication d'assiettes de centrifugation pour la fabrication de fibres minérales, notamment de verre, comportant une partie concave (dite chambre) et un rabat périphérique. Ainsi, lorsque le flan de départ est tel que le traitement thermique sur la pièce complètement mise forme ne donne pas avec succès la structure à gros grains souhaitée dans toute la pièce, en particulier au niveau du rabat périphérique, on peut fabriquer l'assiette en créant la microstructure cristalline sur un produit intermédiaire, puis l'on transforme ensuite ce produit intermédiaire dans lequel on a figé la structure à gros grains. L'invention a ainsi pour objet particulier un procédé de fabrication d'une assiette de centrifugation pour fabriquer des fibres minérales, notamment de verre, comportant une chambre et un rabat périphérique, dans lequel :

- au cours du formage partiel à chaud, on emboutit le flan de façon à former la chambre et éventuellement un rabat d'inclinaison intermédiaire,
- puis on réalise le traitement thermique de recristallisation, et
- on forme ensuite par un nouvel emboutissage à chaud le rabat périphérique, le cas échéant en rabattant à l'inclinaison voulue le rabat intermédiaire.

D'autres caractéristiques et avantages de l'invention apparaîtront dans la description détaillée qui va suivre, faite en regard des dessins annexés sur lesquels :

- **la figure 1** illustre la déformation d'un flan d'alliage à la suite d'un emboutissage, la figure 1A représentant en vue de dessus le flan de départ et la figure 1B représentant en perspective une portion du flan embouti, et donne une définition graphique des grandeurs $\varepsilon_1$ et $\varepsilon_2$ utilisées dans l'exposé de l'invention ;
- la **figure 2** représente une vue en perspective d'une demi-assiette de centrifugation susceptible d'être fabriquée selon l'invention ;
- **la figure 3** représente graphiquement la taille des grains d'un alliage renforcé par dispersion d'oxydes après recristallisation secondaire d'une pièce emboutie, en fonction du taux de déformation local exprimé dans un système ($\varepsilon_1$, $\varepsilon_2$) ;
- **la figure 4** représente schématiquement l'évolution de la section du flan à chaque stade de la fabrication suivant l'invention de l'assiette représentée à la figure 2.

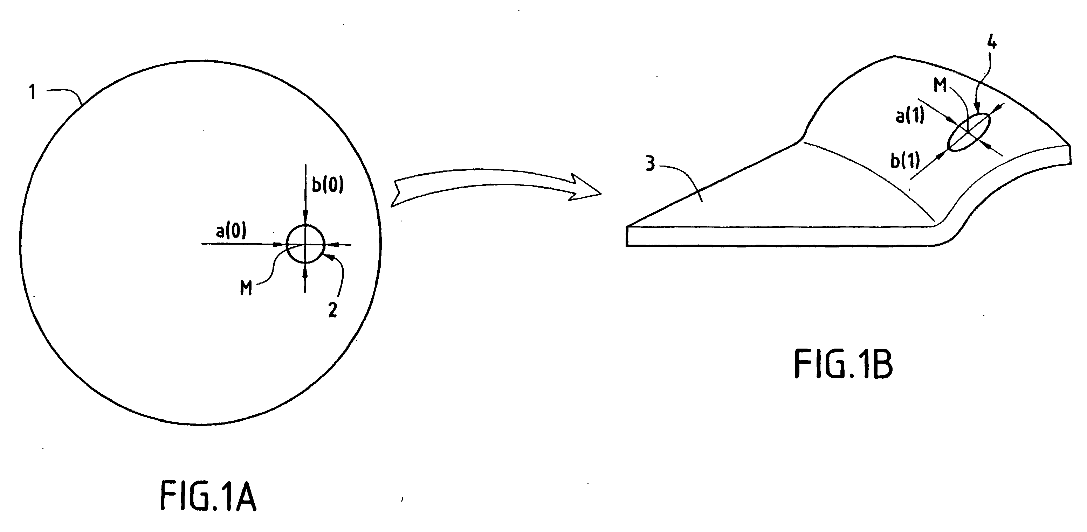

La **figure 1** est un schéma explicatif visant à définir clairement les grandeurs caractéristiques utilisées par la suite.

La **figure 1A** représente une vue en élévation d'un flan 1 circulaire en alliage renforcé d'oxydes. Sur la surface de ce flan est figuré un cercle élémentaire 2 centré sur un point M dont les dimensions sont repérées sur deux axes orthogonaux par les diamètres a (0) et b (0).

Lorsqu'il est embouti verticalement (c'est-à-dire perpendiculairement au plan de la figure) entre un poinçon et une matrice non représentés, ce flan subit une déformation locale en chaque point de sa surface de telle sorte que le cercle élémentaire centré sur ce point prend un contour en général elliptique.

La **figure 1B** représente en perspective une portion de l'élément embouti 3 résultant où l'ellipse 4 correspond au cercle élémentaire 2 déformé, les diamètres sur les deux axes étant devenus respectivement a (1) et b (1).

Le taux de déformation local au point M est exprimé par les deux grandeurs $\varepsilon_1$ et $\varepsilon_2$ dites déformations vraies :

$$\varepsilon_1 = \ln \, (b(1)/b(0))$$

$$\varepsilon_2 = \ln \, (a(1)/a(0))$$

A chaque point de l'élément embouti correspond ainsi un couple ($\varepsilon_1$, $\varepsilon_2$). La position de ces couples repérée sur un graphe $\varepsilon_1 = f(\varepsilon_2)$ forme un ensemble de points qui constitue le profil de déformation de l'embouti.

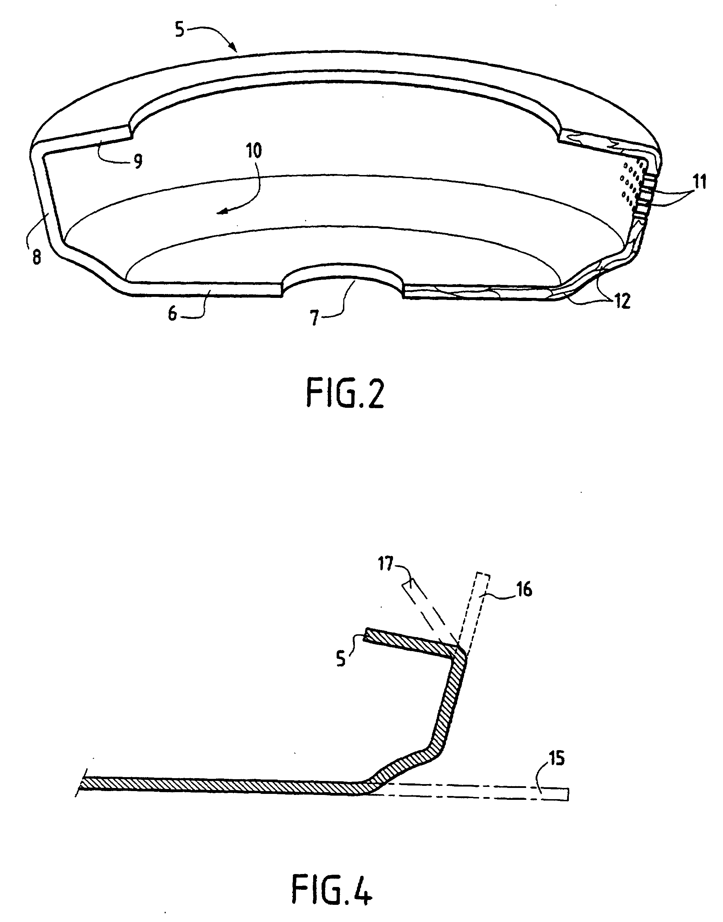

La figure 2 représente une vue en perspective d'une assiette 5 de centrifugation, coupée en deux suivant un de ses plans de symétrie, dont on va décrire le procédé de fabrication par emboutissage.

L'assiette 5 comporte un fond plat 6 percé d'un orifice 7, une paroi latérale 8 et un rabat périphérique 9. Ce profil définit une cavité interne 10 dite chambre destinée en fonctionnement à recevoir une matière vitreuse fondue, telle que du verre, qui s'écoule hors de celle-ci sous l'effet de la force centrifuge par une multitude de perforations 11 pratiquées dans la paroi 8.

Suivant l'invention, cette forme est fabriquée par emboutissage à partir d'un flan circulaire tel que 1 constitué d'un alliage renforcé d'oxydes.

Le procédé de l'invention permet d'obtenir sur toute la section de l'assiette 5 une microstructure présentant des grains 12 de forme allongée dont la longueur est de plusieurs millimètres, variant généralement de 10 à 70 mm. Cette structure apparaît après le recuit de recristallisation secondaire. Elle est révélée sur la tranche de l'assiette coupée en deux suivant un de ses plans de symétrie verticaux, au moyen d'une solution d'attaque, de type bien connu dans la technique métallurgique.

Dans l'exemple décrit ci-après, l'alliage est à base de nickel et de chrome, où les particules dispersées sont de l'oxyde d'yttrium. La formulation exacte de cet alliage est la suivante :

| Cr | 30 % en poids |
|----|---------------|
| $T_i$ | 0,5 % en poids |
| Al | 0,3 % en poids |
| C | 0,05 % en poids |

le reste étant constitué par du nickel.

On va maintenant expliquer comment choisir la séquence opératoire à adopter pour fabriquer l'assiette 5 avec la structure cristalline voulue.

## 1. Caractérisation de l'alliage

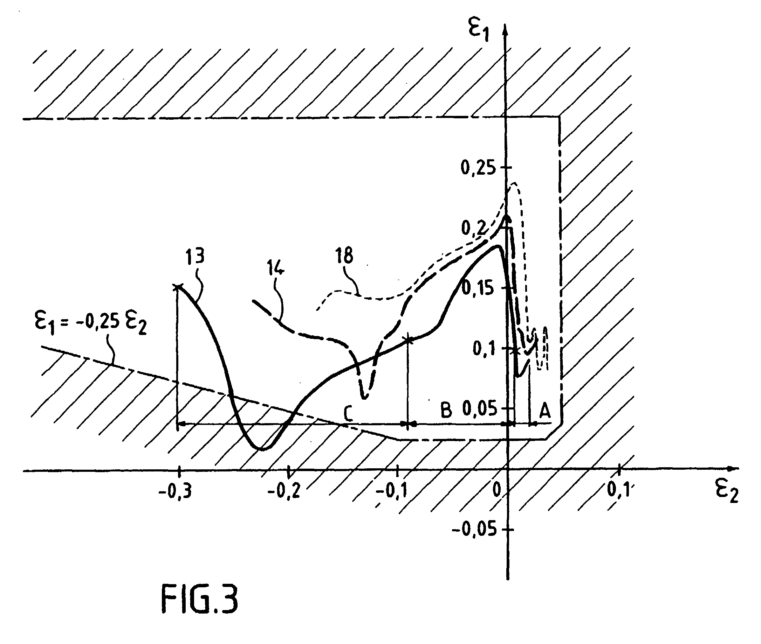

Au préalable, on pratique ou bien on aura pratiqué une série d'essais pour constituer un diagramme d'étalonnage représenté sur la figure 3.

Cette série d'essais réalisés sur un alliage de composition identique à celui que l'on veut utiliser, mais pas nécessairement sur un échantillon issu du même lot commercial, a consisté à déterminer :

(a) la plage de température optimale de formage de l'alliage et,

(b) le domaine de taux de déformation critique inhibant la croissance anormale des grains de ce même alliage.

(a) On taille dans la plaque d'alliage des éprouvettes sous forme de barreaux de 60 mm de long et de 15 mm de large et ayant l'épaisseur de la plaque.

Ces éprouvettes sont tout d'abord sablées, enduites d'une colle céramique sur laquelle on appose un tissu de verre suivant l'enseignement de EP-A-0 668 122.

Les éprouvettes ainsi préparées sont ensuite soumises au même écrasement à une épaisseur déterminée (emboutissage sous un poinçon dont la course est bloquée par une cale), chacune à une température différente entre 900 et 1200°C, puis on les laisse refroidir à la température ambiante.

On recristallise ensuite toutes les éprouvettes embouties dans les mêmes conditions : montée en température de 5°C/min à partir de la température ambiante, jusqu'à la température de recristallisation de 1320°C, maintien d'un palier à cette température pendant 1 h 30, puis refroidissement à l'ambiante.

Chaque éprouvette refroidie est caractérisée par observation visuelle de la taille des grains en mettant en oeuvre les techniques classiques de la métallurgie.

On détermine ainsi visuellement la plage étroite de température dans laquelle les grains sont les plus gros (taille minimum supérieure à 10 mm, par exemple).

Dans le cas de l'alliage ci-dessus, cette plage était de 1075° à 1125°C pour le lot considéré.

(b) Une autre série d'éprouvettes de formes et de tailles diverses est ensuite découpée dans la même plaque d'alliage et soumise à des essais d'emboutissage en trois dimensions suivant des formes variées de façon à balayer un spectre relativement étendu de taux de déformation.

Ce spectre sera plus ou moins large selon que l'on souhaite prévoir les gammes de fabrication d'une seule ou plusieurs formes de pièces, mais englobera bien entendu au moins les profils de déformation correspondant aux pièces désirées. Le nombre d'essais sera donc fixé en conséquence par l'homme du métier.

Pour ces essais, les éprouvettes sont préparées comme précédemment par sablage et revêtement d'un enduit minéral. Les emboutissages sont tous réalisés à la même température de 1100°C (dans la plage optimale) et dans les mêmes conditions notamment de vitesse d'emboutissage.

Ils sont suivis d'un recuit de recristallisation secondaire dans les mêmes conditions que précédemment.

Les pièces embouties recristallisées sont ensuite analysées avec les techniques habituelles de la métallurgie pour déterminer en chaque point de la pièce la taille des grains d'alliage.

Les résultats sont rassemblés sous la forme d'un graphe représenté sur la figure 3 qui indique, en fonction du taux de déformation local appliqué au flan et exprimé dans un système ($\varepsilon_1$ $\varepsilon_2$) la taille des grains obtenus : la zone hachurée met en évidence le domaine de taux de déformation appliqués aux parties de la pièce où les grains ont une taille inférieure à 10 mm, c'est-à-dire les taux de déformation critiques inhibant la croissance anormale des grains de l'alliage.

Sur la figure 3 on voit que l'alliage particulier considéré ne produit pas de croissance anormale de grains après un emboutissage correspondant à un taux de déformation dans les domaines suivants :

$$\varepsilon_1 > 0,3$$

$$\varepsilon_1 < 0,025$$

$$\varepsilon_2 > 0,05$$

$$\varepsilon_1 < -0,25\ \varepsilon_2$$

Lorsque le profil de la pièce emboutie est tel que des taux de déformation de cet ordre sont cependant nécessaires, l'invention a montré qu'il existait une solution pour que cette pièce présente néanmoins la structure à gros grains désirée.

Cette solution consiste à fabriquer une pièce intermédiaire suivant un profil correspondant à des taux de déformation locaux en dehors du domaine critique déterminé sur le graphe, de préférence aussi proche que possible de la limite de ce domaine. C'est cette pièce intermédiaire que l'on soumet au traitement de recristallisation secondaire pour créer la structure à gros grains. On applique ensuite la déformation finale, en conservant cette structure.

## 2. Détermination du procédé de fabrication

On peut calculer mathématiquement de façon connue en soi, à partir des dimensions de l'assiette 5, le taux de déformation à appliquer en chaque point du flan 1 pour former cette pièce par emboutissage.

On trace ainsi sur le graphe de la figure 3 la courbe 13 en reportant dans le repère $(\varepsilon_1, \varepsilon_2)$ les coordonnées de tous les couples $(\varepsilon_1, \varepsilon_2)$ calculés.

Sur la courbe 13, dite « déformée » de la pièce 5, les portions A, B et C correspondent respectivement au fond 6 de l'assiette, à la paroi 8 et au rabat 9.

On constate que la portion C correspondant à la pliure entre la paroi 8 et le rabat 9 se trouve dans le domaine critique, de sorte que la recristallisation après emboutissage ne permettra pas d'obtenir les gros grains désirés dans cette portion de la pièce, justement fortement sollicitée en fonctionnement.

On va donc choisir de former dans un premier temps une pièce intermédiaire correspondant à la courbe de déformée 14, voisine de la courbe 13 mais située en dehors de ce domaine.

Par un calcul mathématique inverse du précédent, on détermine la forme géométrique correspondante de la pièce et on adapte le protocole d'emboutissage en conséquence.

La modélisation ci-dessus n'est valable que si l'alliage est travaillé dans sa plage de température optimale.

Pour appliquer le procédé choisi au lot d'alliage particulier dont on dispose, il faut donc tout d'abord déterminer cette plage.

Dans l'hypothèse où le flan d'alliage utilisé provient d'un autre lot que celui étudié aux points 1 et 2, on répète donc la première série d'emboutissage à température variable.

## 3. Application

Pour la fabrication on a utilisé une tôle d'alliage renforcée par dispersion d'oxydes dont la plage de température optimale d'emboutissage déterminée comme ci-dessus, était de 1075 à 1125°C.

Dans la pratique, on a opéré un premier formage partiel en deux étapes, puis un recuit de recristallisation secondaire et enfin on a terminé le formage.

La figure 4 représente l'évolution de la section du flan au cours de ce procédé :

- le profil en trait mixte 15 représente le flan initial,
- un premier emboutissage suivant le profil en pointillé 16 forme la paroi 8 et la chambre de l'assiette,
- un second emboutissage suivant le profil en trait interrompu 17 forme un rabat d'inclinaison intermédiaire,
- un troisième emboutissage, opéré après la recristallisation secondaire, ramène le rabat intermédiaire à son inclinaison définitive.

On a reporté sur le graphe de la figure 3 les courbes déformées correspondant à chaque emboutissage partiel : les courbes 18 et 14 correspondent respectivement au premier et au deuxième emboutissage. La courbe 13 déjà discutée correspond à la formation du rabat final.

Avant le premier formage, le flan a été sablé et enduit d'un revêtement minéral de la même manière que ci-dessus. L'enduit est renouvelé partiellement avant chaque phase d'emboutissage. Le recuit de recristallisation a été réalisé dans les conditions déjà indiquées : montée en température de 5°C/min, palier de 1 h 30 à 1320°C.

A l'issue de ce traitement thermique de recristallisation secondaire, la pièce présente une structure à gros grains, qui est préservée lors de l'emboutissage ultérieur, dans laquelle les grains ont une longueur de l'ordre de 50 mm.

La description détaillée qui vient d'être donnée a été faite dans le cas particulier de la fabrication d'une assiette de centrifugation. Il va de soi que l'invention s'applique à la fabrication de tout autre article façonné.

## Revendications

1. Procédé de fabrication d'un article, notamment d'un outil utilisable pour l'élaboration du verre, à partir d'un flan constitué d'un alliage renforcé par dispersion d'oxydes, notamment à base de nickel, ayant une structure à grains ultrafins comprenant les étapes consistant à :

   - réaliser un formage partiel à chaud par emboutissage dudit flan à une température au moins égale à sa température de plasticité, pour former une pièce façonnée,
   - soumettre la pièce façonnée à un traitement thermique de recristallisation secondaire de façon à développer une croissance anormale des grains, et
   - réaliser un nouveau formage à chaud par emboutissage pour donner à la pièce façonnée recristallisée la forme de l'article.

2. Procédé selon la revendication 1, dans lequel on enduit le flan métallique avant l'opération d'emboutissage par une colle à base d'un matériau minéral, notamment céramique.

3. Procédé selon la revendication 1 ou 2, dans lequel on refroidit la pièce après chaque opération à chaud.

4. Procédé selon l'une de revendications précédentes comprenant les étapes préalables suivantes :

   - on soumet une série d'éprouvettes d'alliage identiques à un emboutissage dans des conditions, notamment de charge et de vitesse, identiques, mais à des températures variables,
   - on soumet les éprouvettes embouties à un traitement thermique de recristallisation secondaire,
   - on observe la taille des grains obtenus à la suite de la recristallisation,
   - on détermine la plage de température d'emboutissage pour laquelle les grains ont subi une croissance anormale, et
   - on choisit la température d'emboutissage du flan dans la plage de température optimale ainsi définie.

5. Procédé selon l'une des revendications précédentes dans lequel la plage de température d'emboutissage va de 700 à 1200°C.

6. Procédé selon l'une des revendications précédentes, dans lequel le taux de déformation local appliqué au flan au cours du formage partiel à chaud est en deçà de la limite critique inhibant la croissance anormale de l'alliage utilisé.

7. Procédé selon la revendication 6, comprenant les étapes préalables suivantes :

   - on soumet une série d'éprouvettes d'un alliage de composition identique à l'alliage utilisé, à un emboutissage à une température choisie dans la plage de température optimale de l'alliage constituant les éprouvettes définie comme à la revendication 4, et suivant des profils de déformation variables,
   - on soumet les éprouvettes embouties à un traitement thermique de recristallisation secondaire,
   - en chaque point des éprouvettes embouties recristallisées, on observe la taille des grains d'alliage et on détermine le taux de déformation local de l'éprouvette,

   - on détermine le domaine critique des taux de déformation locaux inhibant la croissance anormale, c'est-à-dire pour lesquels on n'observe pas de grains résultant d'une croissance anormale, et
   - on choisit le taux de déformation appliqué lors du formage partiel à chaud en dehors de ce domaine critique.

8. Procédé selon l'une des revendications précédentes dans lequel le taux de déformation local appliqué lors du formage partiel satisfait en tout point du flan la relation :

$$\varepsilon_1 \geq -0,25\ \varepsilon_2$$

$$\varepsilon_2 \leq 0,5$$

9. Procédé de fabrication, suivant l'une des revendications précédentes, d'une assiette de centrifugation pour fabriquer des fibres minérales, notamment de verre, comportant une chambre et un rabat périphérique, dans lequel :

   - au cours du formage partiel à chaud on emboutit le flan de façon à former la chambre et éventuellement un rabat d'inclinaison intermédiaire,
   - puis on réalise le traitement thermique de recristallisation, et
   - on forme ensuite par un nouvel emboutissage à chaud le rabat périphérique, le cas échéant en rabattant à l'inclinaison voulue le rabat intermédiaire.

**Patentansprüche**

1. Verfahren zur Herstellung eines Artikels, insbesondere eines Werkzeugs, das zur Glasbearbeitung verwendbar ist, aus einer Ronde, die aus einer insbesondere Nickel als Basis habenden, durch dispergierte Oxide verfestigten Legierung mit einem Gefüge mit ultrafeinen Körnern besteht, das die Stufen umfasst, die in

   - einer teilweisen Warmumformung durch Tiefziehen der Ronde bei einer Temperatur, die mindestens ihre Fließtemperatur beträgt, um ein Formteil zu bilden,

   - einem derartigen Sekundärrekristallisationsglühen des Formteils, dass ein anomales Kornwachstum stattfindet, und

   - einer erneuten Warmumformung durch Tiefziehen, um dem rekristallisierten Formteil die Form des Artikels zu verleihen,

bestehen.

2. Verfahren nach Anspruch 1, in welchem vor dem Tiefziehen ein Klebstoff auf der Basis eines anorganischen, insbesondere keramischen Materials auf die Metallronde aufgetragen wird.

3. Verfahren nach Anspruch 1 oder 2, in welchem das Formteil nach jedem in der Hitze stattfindenden Arbeitsgang abgekühlt wird.

4. Verfahren nach einem der vorhergehenden Ansprüche, das die vorhergehenden Stufen:

 - Tiefziehen einer Reihe von Probekörpern aus einer identischen Legierung unter Bedingungen, insbesondere Last und Geschwindigkeit, die gleich, aber die Temperaturen veränderlich sind,

 - Sekundärrekristallisationsglühen der tiefgezogenen Probekörper,

 - Betrachten der Größe der nach der Rekristallisation erhaltenen Körner,

 - Ermitteln des Tiefzieh-Temperaturbereichs, in welchem die Körner anomal gewachsen sind, und

 - Auswählen der Tiefziehtemperatur der Ronde in dem so definierten optimalen Temperaturbereich

 umfasst.

5. Verfahren nach einem der vorhergehenden Ansprüche, in welchem der Tiefzieh-Temperaturbereich 700 bis 1 200 °C umfasst.

6. Verfahren nach einem der vorhergehenden Ansprüche, in welchem der lokale Verformungsgrad der Ronde bei der teilweisen Warmumformung kleiner als die kritische Grenze ist, die das anomale Wachstum der verwendeten Legierung hemmt.

7. Verfahren nach Anspruch 6, das die vorhergehenden Stufen:

 - Tiefziehen einer Reihe von Probekörpern aus einer Legierungszusammensetzung, die gleich der der verwendeten Legierung ist, bei einer Temperatur, die aus dem Temperaturbereich ausgewählt ist, der für die die Probekörper bildende Legierung optimal und wie in Anspruch 4 definiert ist, gemäß veränderlichen Verformungsprofilen,

 - Sekundärrekristallisationsglühen der tiefgezogenen Probekörper,

 - Betrachten der Größe der Legierungskörner an jedem Punkt der rekristallisierten tiefgezogenen Probekörper und Ermitteln des lokalen Verformungsgrads des Probekörpers,

 - Ermitteln des kritischen Bereichs der lokalen Verformungsgrade, der das anomale Wachstum hemmt, d.h. für diejenigen, bei welchen keine Körner beobachtet werden, die aus einem anomalen Wachstum resultieren, und

 - Auswählen des Verformungsgrads der teilweisen Warmumformung außerhalb dieses kritischen Bereichs

 umfasst.

8. Verfahren nach einem der vorhergehenden Ansprüche, in welchem der lokale Verformungsgrad der Warmumformung an jedem Punkt der Ronde die Relation

$$\varepsilon_1 \geq -0{,}25\varepsilon_2,$$

$$\varepsilon_2 \leq 0{,}5$$

erfüllt.

9. Verfahren zur Herstellung nach einem der vorhergehenden Ansprüche einer SchleuderRonde zur Erzeugung von insbesondere aus Glas bestehenden anorganischen Fasern, die eine Kammer und einen nach innen umgebogenen umfänglichen Rand umfasst, wobei

 - bei der teilweisen Warmumformung die Ronde derart tiefgezogen wird, dass die Kammer und gegebenenfalls ein nach innen umgebogener umfänglicher Rand mit einer vorübergehenden Neigung gebildet,
 - danach rekristallisationsgeglüht und
 - anschließend der nach innen umgebogene umfängliche Rand durch erneutes Warmtiefziehen geformt wird, gegebenenfalls, indem der vorübergehende Rand mit der gewünschten Neigung nach innen umgebogen wird.

**Claims**

1. Method of manufacturing an article, notably a tool which can be used for producing glass, from a blank consisting of an alloy reinforced by dispersion of oxides, in particular based on nickel, having a structure with ultrafine grains, comprising the steps consisting of:

- carrying out a partial hot forming by pressing the said blank at a temperature at least equal to its plasticity temperature, in order to form a fashioned piece,

- subjecting the fashioned piece to a secondary recrystallisation heat treatment so as to develop an abnormal growth of the grains, and

- carrying out a further hot forming by pressing in order to give the recrystallised fashioned piece the shape of the article.

2. Method according to Claim 1, in which the metallic blank is coated, before the pressing operation, with a glue based on mineral material, in particular ceramic.

3. Method according to Claim 1 or 2, in which the piece is cooled after each hot operation.

4. Method according to one of the preceding claims, comprising the following prior steps:

- a series of identical alloy test pieces are subjected to pressing under conditions, notably of load and speed, which are identical but at variable temperatures,

- the pressed test pieces are subjected to a secondary recrystallisation heat treatment,

- the size of the grains obtained following the recrystallisation is observed,

- the temperature range of the pressing at which the grains have undergone abnormal growth is determined, and

- the pressing temperature of the blank is chosen in the optimum temperature range thus defined.

5. Method according to one of the preceding claims, in which the pressing temperature range ranges from 700 to 1200°C.

6. Method according to one of the preceding claims, in which the degree of local deformation applied to the blank during the partial hot forming is below the critical limit inhibiting the abnormal growth of the alloy used.

7. Method according to Claim 6, comprising the following prior steps:

- a series of test pieces of an alloy with a composition identical to the alloy used is subjected to pressing at a temperature chosen in the optimum temperature range of the alloy constituting the test pieces defined as in Claim 4, and according to variable deformation profiles,

- the pressed test pieces are subjected to a secondary recrystallisation heat treatment,

- at each point on the recrystallised pressed test pieces, the size of the alloy grains is observed and the degree of local deformation of the test piece is determined,

- the critical domain of the degrees of local deformation inhibiting abnormal growth is determined, that is to say for which no grains resulting from an abnormal growth are observed, and

- the degree of deformation applied during the partial hot forming is chosen outside this critical domain.

8. Method according to one of the preceding claims, in which the degree of local deformation applied during the partial forming satisfies, at every point on the blank, the relationship:

$$\varepsilon_1 \geq -0.25 \, \varepsilon_2$$

$$\varepsilon_2 \leq 0.5$$

9. Method of manufacturing, according to one of the preceding claims, a centrifugation plate for manufacturing mineral fibres, in particular glass, having a chamber and a peripheral flange, in which:

- during the partial hot forming the blank is pressed so as to form the chamber and possibly a flange with intermediate inclination,

- then the recrystallisation heat treatment is carried out, and

- next the peripheral flange is formed by a further hot pressing, where necessary by folding over the intermediate flange to the required inclination.

FIG.1A

FIG.1B

EP 0 885 979 B1

FIG.2

FIG.4

FIG.3